# EUROPÄISCHE PATENTSCHRIFT

(11) **EP 2 552 768 B1**
(45) Veröffentlichungstag und Bekanntmachung des Hinweises auf die Patenterteilung: **15.07.2020**
(21) Anmeldenummer: 11743952.1
(22) Anmeldetag: 25.03.2011
(51) Int. Cl.: B62J 9/00, B62J 7/04

(54) **HALTEVORRICHTUNG ZUM ANBRINGEN VON BEHÄLTNISSEN AN EINEM TRÄGER**
RETAINING ARRANGEMENT FOR FITTING CONTAINERS ON A CARRIER
DISPOSITIF DE MAINTIEN POUR LE MONTAGE DE CONTENANTS À UN SUPPORT

(30) Priorität: 26.03.2010 DE 202010004308 U
(43) Veröffentlichungstag der Anmeldung: 06.02.2013
(73) Patentinhaber: Ortlieb Sportartikel GmbH, 91560 Heilsbronn (DE)
(72) Erfinder: ORTLIEB, Hartmut, 91560 Heilsbronn (DE); MARTIN, Gerd, 90584 Allersberg (DE)
(74) Vertreter: Schuhmann, Albrecht
(86) Internationale Anmeldenummer: PCT/DE2011/000314
(87) Internationale Veröffentlichungsnummer: WO 2011/116758

(56) Entgegenhaltungen:
- EP-A1- 0 477 010
- EP-A1- 0 691 263
- WO-A1-97/38892
- CN-Y- 2 401 433
- DE-A1- 4 041 460
- DE-C- 474 410
- DE-U1-202008 013 186
- DE-U1-202009 004 989
- FR-A- 1 127 921
- GB-A- 191 222 688
- US-A- 3 937 374
- US-A- 5 579 971

## Beschreibung

Die vorliegende Erfindung betrifft eine Haltevorrichtung zum Anbringen von Behältnissen an einem Träger, insbesondere zum Anbringen von Packtaschen oder ähnlichen Behältnissen an einem Gepäckträger.

Es sind zahlreiche Packtaschen für Fahrräder und insbesondere zum Anbringen an Gepäckträgern bekannt. Viele dieser Packtaschen verfügen über Haltevorrichtungen, wie z.B. Hacken oder Riemen, welche an den Taschen angenäht oder anders befestigt sind, mittels welcher diese an der oberen Strebe eines Gepäckträgers angebracht werden können. Auch sind Packtaschen bekannt, welche über stabilisierende Vorrichtungen, wie eine Schiene oder Platte auf ihrer Rückseite verfügen an welcher z.B. Haken zum Einhängen in die obere Strebe eines Gepäckträgers angeordnet sind CN 2401433 Y ist der nächstliegende Stand der Technik und offenbart die folgenden Merkmale des Anspruchs 1: Haltevorrichtung zum Anbringen von Behältnissen an einem Gepäckträger, insbesondere zum Anbringen von Packtaschen oder ähnlichen Behältnissen an einem Gepäckträger, wobei die Haltevorrichtung aus einer Schiene, besteht, wobei die Scheine der Haltevorrichtung auf ihrer einen Seite über variable Anbringpunkte für die Anbringung von Befestigungselementen zum Befestigen der Scheine der Haltevorrichtung an dem Gepäckträger in einer variablen Position, nicht zwingend an der oberen Strebe des Gepäckträgers befestigt werden, sondern an einem oder mehreren Punkten an Streben des Gepäckträgers angebracht werden mit vorgesehenen Befestigungselementen.

Eine derartige Ausführung ist z.B. in der DE 4041460A1 offenbart, welche eine Tasche mit einer auf ihrer Rückseite angeordnete Schiene zeigt, welche mit Haken ausgerüstet ist mittels welchen sich die Tasche in die obere Strebe eines Gepäckträgers einhängen lässt. Auch in der DE 202006017966U1 ist eine Variante für eine solche Befestigung von Behältnissen an einen Gepäckträger gezeigt bei welcher zwei Haken an die Rückseite der Tasche fest befestigt sind und mittels welchen die Tasche an einem Gepäckträger befestigt werden kann.

Als Haltevorrichtung zum Anbringen von Behältnissen sind auch speziell dafür vorbereitete Träger, insbesondere Gepäckträger bekannt, welche über fest angeordnete Befestigungsstellen für Behältnisse, wie z.B. Taschen verfügen. Beispielhaft ist hier die WO 2006/086948A1 zu nennen, in welcher ein Gepäckträger gezeigt ist, welcher mit Befestigungselementen zum Anbringen von einem Behältnis ausgerüstet ist.

Bei den erstgenannten Varianten wird stets die obere Strebe eines Gepäckträgers zum Anbringen eines Behältnisses genutzt, was zum einen aufgrund der Gewichtsverteilung und/oder aus Gründen der dadurch ggf. eingeschränkten Nutzbarkeit des oberen Teils des Gepäckträgers nachteilig erscheint. Durch die Anbringung der Haken oder der Schiene mit den daran angebrachten Haken tragen die anzubringenden Taschen außerdem auf der Rückseite sehr stark auf, was optisch unschön und beim Tragen am Körper störend ist.

Die Variante des genannten Gepäckträgers mit fest integrierten Befestigungspunkten bedarf zum einen der Montage eines kompletten Gepäckträgers und der zugehörigen Taschen und ist darüber hinaus auch nicht variabel bezüglich der Position oder Lage der Anbringung von Taschen.

Aufgabe der vorliegenden Erfindung ist es eine Haltevorrichtung zum Anbringen von Behältnissen an einem Träger, insbesondere zum Anbringen von Packtaschen oder ähnlichen Behältnissen an einem Gepäckträger zu schaffen, welche die genannten Nachteile nicht aufweist. Insbesondere soll die Anbringung an unterschiedliche Gepäckträger in verschiedenen Ausrichtungen und Positionen möglich sein und die Verwendung von auf der Rückseite glatten bzw. flachen Taschen möglich sein.

Diese Aufgabe wird mit den Merkmalen des Anspruchs 1 gelöst. Fortbildungen und vorteilhafte Ausführungen der Erfindung sind in den weiteren Ansprüchen umfasst.

Erfindungsgemäß ist eine Haltevorrichtung nach den Merkmalen des Anspruchs 1.

Erfindungsgemäß ist weiter eine Haltevorrichtung zum Anbringen von Behältnissen an einem Träger, insbesondere zum Anbringen von Packtaschen oder ähnlichen Behältnissen an einem Gepäckträger, dass die Haltevorrichtung aus einer oberen Schiene und einem mit dieser verbundenen unteren Befestigungselement besteht, wobei das untere Befestigungselement mit einem weiteren Aufnahmepunkt für die Verbindung zu dem Behältnis und mit einer universellen Befestigungsvorrichtung zum fixieren mit einer Strebe des Trägers ausgerüstet ist.

Die bevorzugte Ausführung der Erfindung ist die Haltevorrichtung bestehend aus einer oberen Schiene mit einem daran mittels zwei Streben abgebrachten unteren Befestigungselement, wodurch eine an die Haltevorrichtung angebrachte Tasche an zwei oberen und einem unteren Befestigungspunkt fixiert ist. Durch die sich so ergebende Dreipunkthalterung ist die Tasche zum einen gegen seitliches Herausschwenken während der Fahrt gesichert und zum anderen verteilt sich das Gewicht auf alle Haltepunkte. Alternativ kann die Haltevorrichtung bei Verwendung nur der oberen Schiene durch entsprechend große und stabile Verbindungen zum Behältnis ein seitliches Herausschwenken der Tasche vermindern.

Die obere Schiene kann aufgrund der daran relativ frei positionierbar anbringbaren Befestigungselemente zum Befestigen an einem Träger sehr individuell an einen vorhandenen Träger montiert werden. Die Schiene muss dabei nicht zwingend an der oberen Strebe des Gepäckträgers befestigt werden sondern kann an einem bzw. mehreren Punkten an Streben des Gepäckträgers angebracht werden. Für die Verbindung der Schiene mit den Streben des Gepäckträgers sind Befestigungselemente vorgesehen, welche als Klemmen, Schellen, Gurte, Bänder oder Seile ausgeführt sind und an verschiedenen Punkten an der Schiene fixierbar sind.

Die Schiene ist nach einer bevorzugten Ausführung z.B. mittig mit Langlöchern oder einer Lochreihe versehen, in welche die Befestigungselemente eingebracht werden. Die Befestigungselemente werden dabei um eine geeignete Strebe des Gepäckträgers angeordnet und mit der Schiene verbunden, d.h. bevorzugt verschraubt, womit eine sehr individuelle Anbringung der Schiene an verschiedenste Gepäckträger ermöglicht wird. Die Schiene kann beispielsweise an der oberen Strebe eines Gepäckträgers mit zwei oder mehreren Befestigungselementen angebracht werden, aber auch an nach unten reichenden Streben des Gepäckträgers mittels der Befestigungselemente angebracht werden. Besonders positiv sind Befestigungselemente, wie Schellen, welchen eine mittige Kraftverteilung auf die Strebe und der Verschraubung an der Schiene, an welcher Sie angreifen, aufweisen und mit einer rutschhemmenden Fläche ausgeführt sind. Durch die frei positionierbare Lage der Befestigungsmittel ist es zum einen möglich die Schiene an nahezu jeden Gepäckträger zu montieren und zum anderen kann die Schiene sowohl waagrecht als auch in jeder gewünschten Neigung, für eine entsprechende Lage der anzubringenden Tasche montiert werden.

Die Schiene verfügt weiter an ihrer, dem Gepäckträger abgewandten Seite über an dieser fest angebrachte oder lösbare Aufnahmepunkte für die Anbringung einer Tasche oder einem anderen Behältnisses, wobei die Tasche oder das Behältnis entsprechende Gegenstücke für eine Verbindung mit den Aufnahmepunkten der Schiene aufweist. Die Aufnahmepunkte sind dabei wie die Befestigungspunkte an der Schiene frei positionierbar anbringbar, wobei diese dabei bevorzugt durch die Langlöcher oder Lochreihen der Schiene anschraubbar sind. Es können verschiedene Aufnahmelemente für Taschen zum Einsatz kommen, womit die Haltevorrichtung für verschiedene Taschen unterschiedlicher Systeme grundsätzlich verwendbar ist.

Die bevorzugte Ausführung der erfindungsgemäßen Haltevorrichtung beschreibt mit den vorgesehenen Elementen Schiene und unteres Befestigungselement die Form eines Dreiecks und kann in ihrer Position an einem Gepäckträger relativ frei positionierbar angebracht werden. Insbesondere die Wahl der Höhe ist mit der erfindungsgemäßen Ausführung einer Haltevorrichtung mit Positionsveränderlichen Befestigungselementen möglich um z.B. Taschen mit schwerem Inhalt tiefer positionieren zu können.

Das untere Befestigungselement ist in seiner bevorzugten Ausführung mit einer relativ großen Platte und einem schwenkbar gelagerten Hebel ausgerüstet, wobei die Platte eine Bohrung enthält durch welche eine Schraube geführt ist auf welche von hinten der Hebel schraubbar aufgesetzt ist welcher in etwa die Länge einer Seitenlänge der Platte aufweist. Bei der Montage kommt die Strebe des Gepäckträgers zwischen die Platte und dem von hinter anschraubbaren Hebel, womit durch Festschrauben eine Fixierung des unteren Befestigungspunktes an der Gepäckstrebe erreicht wird. Auf der durch Platte und Hebel reichenden Schraube ist bevorzugt auf ihrer der Tasche zugewandten Seite ein weiterer Aufnahmepunkt angeordnet welcher mit einem vorgesehenen Befestigungspunkt an einer Tasche in Eingriff bringbar ist.

Die Befestigungselemente an der Haltevorrichtung zum Anbringen von Behältnissen an einem Träger sind nach einer weiteren Ausführung mit einer Verriegelungsmechanik ausgerüstet, wobei ein an der Haltevorrichtung anzubringendes Behältnis mittels in diesem ausgeführten Aufnahmelementen mit den Befestigungselementen der Haltevorrichtung verbindbar ist. Das Befestigungselement ist dabei mit einer Verriegelungsmechanik ausgerüstet, welche eine Einführung des Aufnahmelements in das Befestigungselement ohne vorherige Entriegelung erlaubt, d.h. eine an der Haltevorrichtung anzubringende Tasche oder dgl. wird in die Befestigungselemente eingeführt und die Verriegelung erfolgt allein aufgrund der nach unten drückenden Tasche oder mittels leichten Druck durch den Bediener, eine vorherige Entriegelung oder Öffnung bei der Verbindung ist nicht erforderlich, wodurch das Behältnis selbstverriegelnd anbringbar ist. Zum lösen des Behältnisses von der Haltevorrichtung verfügt diese über eine Handhabe welche beim Abnehmen des Behältnisses betätigt wird.

Im Folgenden wird die Erfindung anhand von Zeichnungen beispielhaft näher beschrieben, dabei zeigen:
- Fig.1: eine perspektivische Darstellung eine Haltevorrichtung an einem Gepäckträger
- Fig. 2: eine perspektivische Ansicht einer Haltevorrichtung von vorne
- Fig. 3: eine perspektivische Ansicht einer Haltevorrichtung von hinten
- Fig. 4: eine Draufsicht einer weiteren Version einer Haltevorrichtung
- Fig. 5: eine perspektivische Ansicht einer weiteren Version einer Haltevorrichtung von vorne
- Fig. 6: eine perspektivische Ansicht einer weiteren Version einer Haltevorrichtung von hinten

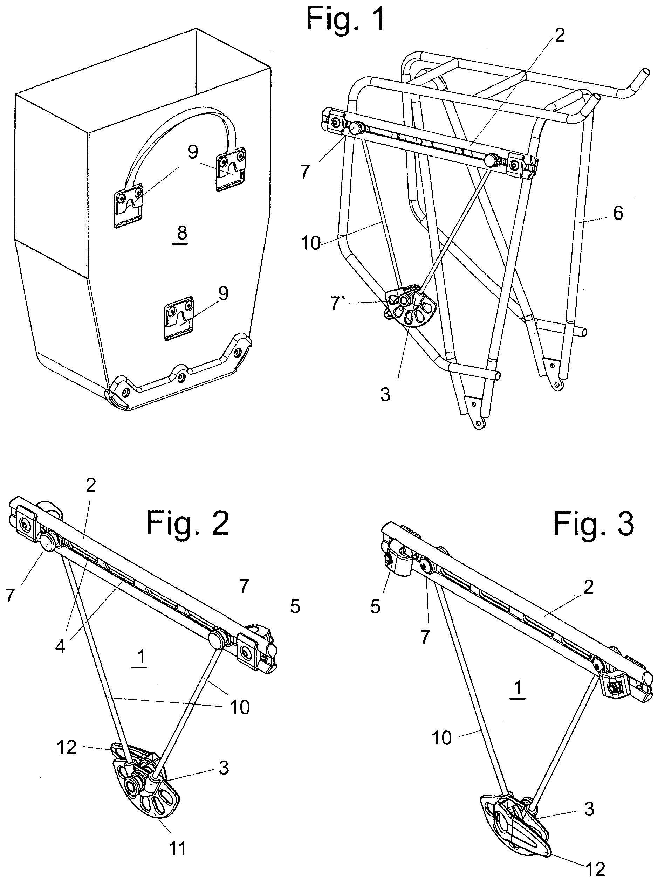

In der Fig. 1 ist die erfindungsgemäße Haltevorrichtung zum Anbringen von Behältnissen, montiert an einem Gepäckträger gezeigt, sowie eine Packtasche 8, welche über korrespondierende Aufnahmen 9 verfügt, mittels welchen diese an der Haltevorrichtung an den Befestigungspunkten 7 bzw. 7' anbringbar ist.

Die hier dargestellte Variante verfügt über drei Aufnahmepunkte 7, 7', welche in dem Verlauf obere Schiene 2, Strebe 10, untere Befestigungsvorrichtung 3 und zweite Strebe 10 ein Dreieck bilden, womit die Tasche gut und ausschwenksicher befestigt werden kann. Die obere Schiene 2 ist in dieser Montagevariante nicht an der oberen Strebe des Gepäckträgers 6 angebracht, sondern an zwei nach unten ragenden Streben in einer Position unter der oberen Strebe des Gepäckträgers. Die Position der oberen Schiene 2 kann relativ frei positioniert werden, wobei in der gezeigten Montagevariante der Angriffspunkt für die untere Befestigungsvorrichtung 3 an einer weiteren Strebe zu beachten ist und die Position der gesamten Haltevorrichtung entsprechend abzustimmen ist. Durch die Möglichkeit der freien Positionierung können Taschen 8 an der Haltevorrichtung 1 in einer möglichst tiefen Position am Fahrrad angebracht werden was sich sehr positiv auf das Fahrverhalten und die Sicherheit auswirkt.

Die Schiene 2 der Haltevorrichtung 1 wird dabei mittels Klemmen 5, welche in Fig. 2 und Fig. 3 gut zu erkennen sind, an Streben des Gepäckträgers montiert und verfügen über eine Stellschraube zum festklemmen. Die hier gezeigten Klemmen 5 werden um die Strebe des Gepäckträgers 6 positioniert und können von der, dem Gepäckträger 6 abgewandten Seiten an der Schiene 2 festgezogen werden. Die Schiene 2 ist in dieser Variante mit Langlöchern 4 ausgerüstet welche eine sehr flexible Positionierung der Befestigungsklemmen 5 und der Aufnahmepunkte 7 ermöglichen. Die Klemmen 5 verfügen nach einer Ausführung auf ihrer um die Strebe des Gepäckträgers greifenden Fläche um eine reibungserhöhende Beschichtung oder Einlage, bzw. sind aus einem rutschhemmenden Material ausgeführt. Auch die Aufnahmepunkte 7 zur Anbringung der Tasche an der Schiene 2, bzw. dem Haltesystem 1 sind in dieser Variante sehr flexibel positionierbar und ebenfalls durch die Langlöcher montierbar. Der Aufnahmepunkt 7, hier als zylindrischer, mit einer Reduzierung versehene Adapterknopf wird von vorne, also der Tasche 8 zugewandten Seite positionier und mittels einer Schraube von der anderen Seite der Schiene festgeschraubt. Idealer Weise ist die Schiene 2 mit einer

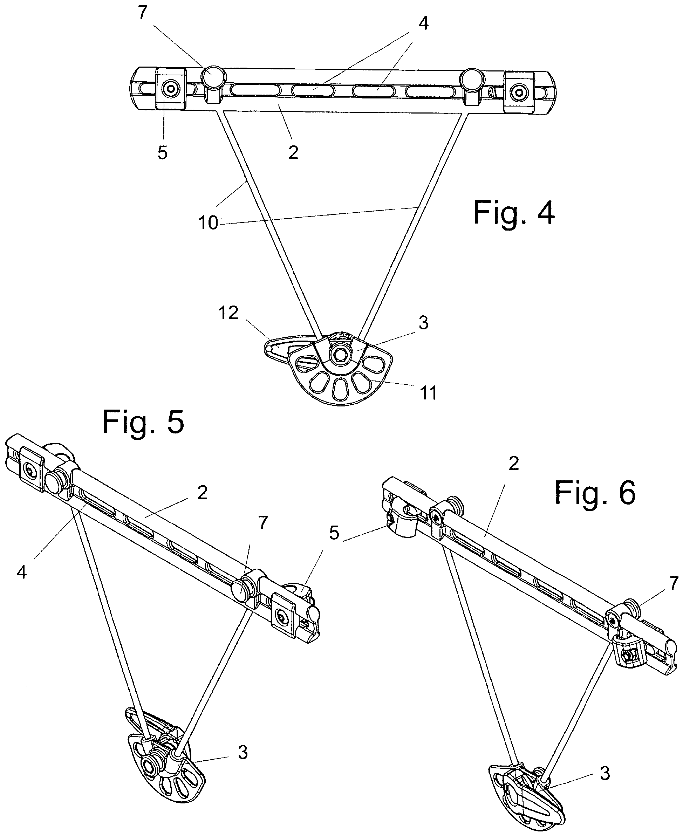

Rasterung bzw. Aufrauhung im Bereich der Langlöcher 4 ausgeführt, wodurch ein seitlicher Verrutschen der festgeschraubten Aufnahmepunkte 5 oder Befestigungselemente 5 wirksam verhindert wird. Die Aufnahmepunkte 5 sind in der gezeigten Variante nach Fig. 1 bis Fig. 3 mittig an der Schiene z.B. in Langlöchern 4 angebracht. Diese können auch gemäß Fig. 4 bis Fig. 6 an der Oberkante der Schiene 2 angebracht sein, womit auch Taschen verwendet werden können bei welchen die Rückseite nicht flach genug ist um ein Einhaken mit den mittig angebrachten Aufnahmepunkten zu ermöglichen. Dabei können die Aufnahmeelemente fest oder lös- bzw. wechselbar an der Schiene 2 angeordnet sein. Es ist grundsätzlich auch möglich verschiedene Aufnahmepunkte 7, bzw. andere Adapterknöpfe an der Haltevorrichtung 1 zu montieren um Taschen unterschiedlicher Anbieter verwenden zu können.

Die Schiene 2 kann grundsätzlich auch alleine als Haltevorrichtung zur Anbringung von Taschen an einem Gepäckträger 6 verwendet werden, wobei die bevorzugte Ausführung die Variante mit Streben 10 und einer unteren Befestigungseinrichtung 3 ist. Die untere Befestigungseinrichtung 3 ist wie in den Figuren gezeigt als Platte 11 ausgeführt, welche mit Streben 10 mit der oberen Schiene verbunden ist. Wie beispielsweise in Fig. 2 und Fig. 3 zu sehen, besitzt die Platte 11 eine Bohrung, durch welche eine Schraube greift, auf welche von hinten ein Haken 12 festschraubbar ist. Auf der, der Tasche zugewandten Seite ist auf die Schraube noch ein Aufnahmepunkt 7' als unterer Befestigungspunkt für eine Tasche 8 angeordnet. Bei der Montage der Haltevorrichtung 1 wird eine Strebe des Gepäckträgers 6 zwischen die Platte 11 und den Haken 12 positioniert und anschließend die Schraube festgezogen um die Haltevorrichtung 1 zu fixieren.

Durch eine relativ groß gewählte Platte 11 und einen entsprechend langen Hebel 12, sowie durch die vielseitigen Möglichkeiten der Montage durch Anbringung der Schiene 2 in verschiedenen Höhen und/oder Neigungen an Streben des Gepäckträgers 6 und der möglichen seitlichen Verstellbarkeit der Aufnahmepunkte 7 und somit der unteren Befestigungseinrichtung 3 lässt sich die erfindungsgemäße Haltevorrichtung 1 an nahezu jeden Gepäckträger und jeden Bedarf bezüglich Position und Lage der Taschen anpassen und montieren.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Haltevorrichtung (1) zum Anbringen von Behältnissen (8) an einem Gepäckträger (6), insbesondere zum Anbringen von Packtaschen oder ähnlichen Behältnissen (8) an einem Ge-päckträger (6), wobei, die Haltevorrichtung (1) aus einer Schiene (2), besteht, wobei die Schiene (2) der Haltevorrichtung (1) auf ihrer einen Seite über variable Anbringpunkte (4) für die Anbringung von Befestigungselementen (5) zum Befestigen der Schiene (2) der Haltevorrichtung (1) an dem Gepäckträger (6) in einer variablen Position, nicht zwingend an der oberen Strebe des Gepäckträgers (6) befestigt werden, sondern an einem oder mehreren Punkten an Streben des Gepäckträgers (6) angebracht werden mit vorgesehenen Befestigungselementen (5) welche Klemmen, Schellen,
Gurte, Bänder oder Seile sind, ausgeführt ist, sowie über in ihrer Position variablen Befestigungspunkten (7) auf ihrer anderen Seite verfügt an welche ein Behältnis (8) mittels an diesem vorhandenen, mit den Befestigungspunkten (7) der Haltevorrichtung (1) korrespondierenden, Aufnahmen (9) anbringbar ist.

2. Haltevorrichtung nach Anspruch 1
**dadurch gekennzeichnet,**
**dass** die Haltevorrichtung (1) aus einer oberen, Schiene und einem mit dieser in Verbindung stehendem unteren Befestigungselement (3) besteht, wobei das untere Befestigungselement (3) mit einem weiteren Aufnahmepunkt (7') für die Verbindung zu dem Behältnis (8) und mit einer universellen Befestigungsvorrichtung zum Fixieren mit einer Strebe des Trägers (6) ausgerüstet ist.

3. Haltevorrichtung nach Anspruch 2
**dadurch gekennzeichnet,**
**dass** das untere Befestigungselement (3) mit zwei Streben (10) mit der oberen Schiene (2) verbunden ist, wobei der untere Befestigungspunkt (3), die beiden Streben (10) und die obere Schiene (2) die Form eines Dreiecks beschreiben.

4. Haltevorrichtung nach Anspruch 2
**dadurch gekennzeichnet,**
**dass** das untere Befestigungselement (3) im Wesentlichen als Platte (11) mit einem daran drehbar gelagerten länglichen Hebel (12) ausgebildet ist, welcher über einen Verstellmechanismus an die Platte (11) anpressbar ist.

5. Haltevorrichtung nach Anspruch 1
**dadurch gekennzeichnet,**
**dass** die obere Schiene mit längs angebrachten Langlöchern (4) oder Lochreihe ausgeführt ist.

6. Haltevorrichtung nach Anspruch 1 und 5
**dadurch gekennzeichnet,**
**dass** die Elemente (5) zum Befestigen der oberen Schiene (2) an dem Träger (6) als Schellen ausgeführt sind welche in einem Langloch oder Loch der Schiene befestigbar sind.

7. Haltevorrichtung nach Anspruch 1 und 5
**dadurch gekennzeichnet,**
**dass** die Elemente (5) zum Befestigen der oberen Schiene (2) an dem Träger (6) als Klemmen ausgeführt sind welche in einem Langloch (4) oder Loch (4) der Schiene (2) befestigbar sind.

8. Haltevorrichtung nach Anspruch 1 und 5
**dadurch gekennzeichnet,**
**dass** die Elemente (5) zum Befestigen der oberen Schiene (2) an dem Träger (6) als Bänder oder Seile ausgeführt sind welche in einem Langloch oder Loch der Schiene befestigbar sind.

9. Haltevorrichtung nach Anspruch 1 und 5
**dadurch gekennzeichnet,**
**dass** die Aufnahmevorrichtung (7) für ein Behältnis (8) als durch Langlöcher (4) der Schiene (2) anbringbare Befestigungselemente (7) ausgeführt ist.

10. Haltevorrichtung nach Anspruch 1
**dadurch gekennzeichnet,**
**dass** die Aufnahmevorrichtung (7) für ein Behältnis (8) außermittig an der Schiene (2) lösbar oder fest angeordnet sind.

11. Haltevorrichtung nach Anspruch 1
**dadurch gekennzeichnet,**
**dass** die Aufnahmevorrichtung (7) für ein Behältnis (8) an der Oberseite der Schiene (2) lösbar oder fest angeordnet sind.

12. Haltevorrichtung nach Anspruch 1
**dadurch gekennzeichnet,**
**dass** die Schiene im Bereich der Langlöcher (4) oder Lochreihe auf wenigstens einer Seite mit einer Rasterung versehen ist.

13. Haltevorrichtung nach Anspruch 1
**dadurch gekennzeichnet,**
**dass** die Befestigungselemente (7) an der Haltevorrichtung (1) mit einer Verriegelungsfunktion für die Fixierung von Aufnahmeelementen (9) eines an der Haltevorrichtung (1) anzubringenden Behältnisses (8) ausgeführt sind.

## Claims

1. Holding device (1) for mounting containers (8) on a luggage rack (6), in particular for mounting paniers or similar containers (8) on a luggage rack (6),
wherein the holding device (1) consists of a rail (2), wherein the rail (2) of the holding device (1) is designed with provided attachment elements (5), which are clamps, brackets, belts, straps or cords, on its one side over variable mounting points (4) for mounting attachment elements (5) for attaching the rail (2) of the holding device (1) on the luggage rack (6) in a variable position, are not necessarily attached on the upper strut of the luggage rack (6), but rather are mounted at one or several points on struts of the luggage rack (6), and has attachment points (7), which are variable in their position, on its other side on which a container (8) can be mounted by means of receptacles (9) present on said container and corresponding to the attachment points (7) of the holding device (1).

2. Holding device according to Claim 1,
**characterized in that**
the holding device (1) consists of an upper rail and a lower attachment element (3) connected thereto, wherein the lower attachment element (3) is equipped with a further pick-up point (7') for connection to the container (8) and with a universal attachment device for fixing to a strut of the rack (6).

3. Holding device according to Claim 2,
**characterized in that**
the lower attachment element (3) having two struts (10) is connected to the upper rail (2), wherein the lower attachment point (3), the two struts (10) and the upper rail (2) form the shape of a triangle.

4. Holding device according to Claim 2,
**characterized in that**
the lower attachment element (3) is designed substantially as a plate (11) having an elongated lever (12) mounted rotatably thereon, which lever can be pressed onto the plate (11) by means of an adjustment mechanism.

5. Holding device according to Claim 1,
**characterized in that**
the upper rail is designed with longitudinally mounted slots (4) or a series of holes.

6. Holding device according to Claim 1 and 5,
**characterized in that**
the elements (5) for attaching the upper rail (2) on the rack (6) are designed as brackets which can be attached in a slot or hole of the rail.

7. Holding device according to Claim 1 and 5,
**characterized in that**
the elements (5) for attaching the upper rail (2) on the rack (6) are designed as clamps which can be attached in a slot (4) or hole (4) of the rail (2).

8. Holding device according to Claim 1 and 5,
**characterized in that**
the elements (5) for attaching the upper rail (2) on the rack (6) are designed as straps or cords which can be attached in a slot or hole of the rail.

9. Holding device according to Claim 1 and 5,
**characterized in that**
the receiving device (7) for a container (8) is designed as attachment elements (7) which can be mounted through slots (4) of the rail (2).

10. Holding device according to Claim 1,
**characterized in that**
the receiving device (7) for a container (8) are releasably or firmly arranged eccentrically on the rail (2) .

11. Holding device according to Claim 1,
**characterized in that**
the receiving device (7) for a container (8) are releasably or firmly arranged on the upper side of the rail (2).

12. Holding device according to Claim 1,
**characterized in that**
the rail is provided with a ratchet mechanism in the region of the slots (4) or row of holes on at least one side.

13. Holding device according to Claim 1,
**characterized in that**
the attachment elements (7) on the holding device (1) are designed with a locking feature for fixing receiving elements (9) of a container (8) to be mounted on the holding device (1).

## Revendications

1. Dispositif de fixation (1) pour disposer des contenants (8) sur un porte-bagages (6), en particulier pour disposer des sacoches ou contenants analogues (8) sur un porte-bagages (6),
sachant que le dispositif de fixation (1) est composé d'un rail (2), sachant que le rail (2) du dispositif de fixation (1) est fixé sur un de ses côtés sur des points de montage (4) variables pour le montage d'éléments de fixation (5) pour fixer le rail (2) du dispositif de fixation (1) dans une position variable, pas forcément sur la jambe de force supérieure du porte-bagages (6), mais est disposé sur un ou plusieurs points sur les jambes de force du porte-bagages (6), est exécuté avec des éléments de fixation (5) prévus, lesquels sont des pinces, des colliers, des sangles, des bandes ou des câbles et dispose de points de fixation (7) variables dans leur position sur son autre côté, sur lequel un contenant (8) peut être disposé au moyen de logements (9) correspondants aux points de fixation (7) du dispositif de fixation (1), existants sur celui-ci.

2. Dispositif de fixation selon la revendication 1,
**caractérisé en ce que**
le dispositif de fixation (1) est composé d'un rail supérieur et d'un élément de fixation (3) inférieur se trouvant en liaison avec celui-ci, sachant que l'élément de fixation (3) inférieur est doté d'un autre point de réception (7') pour la liaison avec le contenant (8) et d'un dispositif de fixation universel pour fixer à une jambe de force du porte-bagages (6).

3. Dispositif de fixation selon la revendication 2,
**caractérisé en ce que**
l'élément de fixation (3) inférieur est relié au rail (2) avec deux jambes de force (10), sachant que le point de fixation (3) inférieur, les deux jambes de force (10) et le rail (2) supérieur décrivent la forme d'un triangle.

4. Dispositif de fixation selon la revendication 2,
**caractérisé en ce que**
l'élément de fixation (3) inférieur est constitué pour l'essentiel sous la forme d'une plaque (11) avec un levier (12) longitudinal logé dessus pouvant tourner, lequel peut être pressé sur la plaque (11) par le biais d'un mécanisme de réglage.

5. Dispositif de fixation selon la revendication 1,
**caractérisé en ce que**
le rail supérieur est exécuté avec des trous oblongs (4) disposés longitudinalement ou une série de trous.

6. Dispositif de fixation selon la revendication 1 et 5,
**caractérisé en ce que**
les éléments (5) pour fixer le rail supérieur (2) au porte-bagages (6) sont exécutés sous la forme de colliers ou de câbles, lesquels peuvent être fixés dans un trou oblong ou un trou du rail.

7. Dispositif de fixation selon la revendication 1 et 5,
**caractérisé en ce que**
les éléments (5) pour fixer le rail supérieur (2) au porte-bagages (6) sont exécutés sous la forme de pinces, lesquelles peuvent être fixées dans un trou oblong (4) ou un trou (4) du rail (2).

8. Dispositif de fixation selon la revendication 1 et 5,
**caractérisé en ce que**
les éléments (5) pour fixer le rail supérieur (2) au porte-bagages (6) sont exécutés sous la forme de bandes ou de câbles, lesquels peuvent être fixés dans un trou oblong ou un trou du rail.

9. Dispositif de fixation selon la revendication 1 et 5,
**caractérisé en ce que**
le dispositif de réception (7) pour un contenant (8) est exécuté sous la forme d'éléments de fixation (7) disposables à travers les trous oblongs (4) du rail (2) .

10. Dispositif de fixation selon la revendication 1,
**caractérisé en ce que**
le dispositif de réception (7) pour un contenant (8) est disposé amovible ou fixe de façon excentrée sur le rail (2).

11. Dispositif de fixation selon la revendication 1,
**caractérisé en ce que**
le dispositif de réception (7) pour un contenant (8) est disposé amovible ou fixe sur le côté supérieur du rail (2).

12. Dispositif de fixation selon la revendication 1,
**caractérisé en ce que**
le rail est prévu avec un crantage dans la zone des trous oblongs (4) ou de la série de trous sur au moins un côté.

13. Dispositif de fixation selon la revendication 1,
**caractérisé en ce que**
les éléments de fixation (7) sont exécutés sur le dispositif de fixation (1) avec une fonction de verrouillage pour la fixation d'éléments de réception (9) d'un contenant (8) à disposer sur le dispositif de fixation (1).
